# EUROPÄISCHE PATENTSCHRIFT

(11) **EP 0 552 480 B1**
(45) Veröffentlichungstag und Bekanntmachung des Hinweises auf die Patenterteilung: **08.05.1996**
(21) Anmeldenummer: 92121745.1
(22) Anmeldetag: 21.12.1992
(51) Int. Cl.: B24C 11/00, C09K 3/14

(54) **Strahlmittel, Verfahren zur Herstellung desselben sowie Verwendung des Strahlmittels**
Abrasive blasting material, process for production thereof and use of the blasting medium
Produit de grenaillage, procédé pour sa fabrication et son utilisation comme produit de grenaillage

(30) Priorität: 23.12.1991 DE 4142893; 06.05.1992 DE 4214988
(43) Veröffentlichungstag der Anmeldung: 28.07.1993
(73) Patentinhaber: EMS-INVENTA AG, CH-8001 Zürich (CH)
(72) Erfinder: Schnelle, Albert, Ing. HTL, CH-7013 Domat/Ems (CH); Thulllen, Helmut, Dipl.-Chem., CH-7402 Bonaduz (CH)
(74) Vertreter: Müller-Boré & Partner Patentanwälte

(56) Entgegenhaltungen:
- WO-A-81/02539
- GB-A- 967 349
- GB-A- 1 086 470
- GB-A- 1 571 239
- GB-A- 2 061 148
- US-A- 4 575 396

## Beschreibung

Die Erfindung betrifft ein Strahlmittel gemäß Oberbegriff des Anspruchs 1, ein Verfahren zur Herstellung dieses Strahlmittels sowie die Verwendung des Strahlmittels.

Die beim Gießen hergestellten Metallguß- bzw. Metalldruckgußteile haben mehr oder weniger Gratrückstände, die beseitigt werden müssen. Aus wirtschaftlichen Gründen sollen diese Gratreste schnell und einfach entfernbar sein. Die Strahl-Entgratung ist zur Zeit das technisch ausgereifteste und wirtschaftlichste Verfahren. Wesentlich ist bei der Teilchenstrahl-Entgratung, daß die Körner geringere Härte haben als der zu entgratende Werkstoff.

Die Nachbehandlung von plangeschliffenen Metalldruckgußteilen z.B. aus Aluminium erfolgt nach dem Stand der Technik mit vegetabilen Strahlmitteln wie gemahlenen Nußschalen und Aprikosenkernen, mit gemahlenen duroplastischen Abfällen, Glaskugeln, Metallschrott, glasgefüllten thermoplastischen Kunststoffen und dergleichen.

Gemäß dem Stand der Technik sollen die kleinsten Teilchen nicht unter 0,5 mm Durchmesser haben, da sonst die Aufprallenergie zu gering ist.

Alle genannten Strahlmittel haben den Nachteil, daß sie neben der Entgratung auf die Oberflächen der Teile nachteilig einwirken. Sie führen zur unerwünschten Mattierung und Aufrauhung, sowie zu "Shotpeening" bei Einsatz von Strahlmitteln mit hohen spezifischen Gewichten wie Eisen oder Stahl.

Infolge Bruch führen Nußschalen, Aprikosenkerne und duroplastische Kunststoffe zu sehr starker Staubentwicklung, was eine Nachbehandlung der Teile erfordert.

Glasperlen brechen und attackieren die Oberflächen. Mit Glaskugeln gefüllte thermoplastische Kunststoffe zeigen bei guter Entgratung ebenfalls eine hohe Lebensdauer, jedoch mit dem Nachteil, daß die Oberflächen mattiert bis aufgerauht werden.

Ausnahmen hiervon bilden ungefüllte thermoplastische Kunststoffe. In Bezug auf Dauerhaftigkeit sind diese Strahlmittel, insbesondere Polyamide und Polycarbonate wohl allen anderen Produkten überlegen, hingegen zeigen sie infolge ihres niedrigen spezifischen Gewichts eine nur ungenügende Entgratungswirkung.

Aus der gattungsbildenden DE-C-960 418 sind Strahlmittel aus einer Mischung eines Kunststoffes mit einem metallischen/mineralischen Stoff in körniger Form oder mit Polyamid- oder Glasfaser bekannt. Die dort empfohlenen Kunststoffe müssen durch geeignete Nachbehandlung gehärtet werden. Die empfohlenen körnigen Beimischungen wie Corund, Quarz und diverse Metalle gestatten wegen ihrer ausgesprochenen Abrasionswirkung keine Extruderverarbeitung beim innigen Mischen mit den Kunststoffen. Die Strahlmittel selbst sind nur in ganz beschränktem Umfang wiederverwendbar, da sie bei Strahlentgraten infolge der hohen Aufprallenergie in ihre Bestandteile zerlegt werden.

Auch aus der US-A-4,575,396 sind Strahlmittel bekannt. Diese enthalten feine Partikel mit einem mittleren Durchmesser von weniger als 0,5 mm und einer relativen Dichte von weniger als 1,5. Die Partikel sind Glaskügelchen mit einer unregelmäßigen Plastikhartmasse außen heraus.

Daher ist es Aufgabe der Erfindung, Strahlmittel zum Entgraten von Metallgußteilen bzw von geschliffenen Metalldruckgußteilen bereitzustellen, die nicht die Nachteile des Standes der Technik zeigen und insbesondere die Oberfläche der zu entgratenden Teile nicht nachteilig beeinflussen und in vollem Umfang wiederverwendbar sind. Weiterhin soll ein Verfahren zur Herstellung dieser Strahlmittel angegeben werden.

Diese Aufgabe wird durch das Strahlmittel gemäß Anspruchs 1, seiner Herstellung gemäß Anspruch 8 bei seiner Verwendung gemäß Anspruch 11 gelöst.

Es wurde nunmehr festgestellt, daß Polymer-Granulate, die mit feinverteilter Bronze gefüllt sind, die Oberflächen, besonders auch geschliffene oder polierte Oberflächen von Metallgußteilen beim Entgraten überraschenderweise nicht nachteilig verändern. Dazu sind Thermoplaste besonders geeignet, da sie ein gewisses Maß an Schlagzähigkeit aufweisen und dadurch beim Aufprallen auf die Metallteile nicht zerbrechen.

Es wird feinverteilte Bronze verwendet, die in idealer Weise in sphärischer Form einsetzbar und ohne Schwierigkeiten und Abrasionseffekte mit Polymeren extrudierbar ist.

Die feinverteilten Bronzepartikel werden mit Haftvermittler bevorzugt, vom Typ handelsüblicher Amino- oder Epoxisilane, beaufschlagt. Dabei kommen 0,1 bis 0,4 Gew.-%, bevorzugt 0,2 bis 0,25 Gew.-% Silan zur Anwendung, das sich auf übliche Weise, z.B. in einem Trommelmischer, gegebenenfalls unter Verwendung geeigneter inerter Lösungsmittel aufbringen läßt.

Als feinverteilte Bronzen eignen sich handelsübliche Typen in sphärischer oder in Pulverform, deren Durchmesser zwischen 0,01 und 0,5 mm liegt. Besonders geeignet sind Partikelgrößen zwischen 0,05 und 0,1 mm.

Die Thermoplast-Granulate sind bevorzugt handelsübliche Polyamid- und Polycarbonat-Typen. Dabei sind Homo- und Copolyamide speziell geeignet. Besonders bevorzugt sind PA 6, PA 6,6, PA 11, PA 12 und ihre Blends.

Alle gemäß dem Stand der Technik üblichen Schlagzähmodifikatoren können den zu spröden Polymeren beigemischt werden.

Der Bronze-Anteil der erfindungsgemäßen Strahlmittel beträgt 20 bis 90 Gew.-%, wobei 60 bis 80 Gew.-% besonders bevorzugt sind. Die vorteilhafte Granulatform ist die kubische Form mit Kantenlängen zwischen 0,50 und 2,0 mm, wobei Kantenlängen zwischen 0,75 und 1,5 mm besonders bevorzugt sind.

Die erfindungsgemäßen Strahlmittel zum Entgraten von geschliffenen Metallgußteilen aus mit fein verteilter Bronze gefülltem Polymer-Granulat werden auf die Weise hergestellt, daß man als geeignetes Polymer-Granulat ein solches aus handelsüblichem Thermoplast aus der Gruppe Polyamid, Polycarbonat auswählt, wobei die Bronze in fein verteilter sphärischer Form oder als Pulver in Partikelgrößen von 0,01 bis 0,5 mm Durchmesser vorliegen soll, 0,1 bis 0,4, bevorzugt 0,2 bis 0,25 Gew.-% Epoxisilan im Mischer unter Zutritt von Luftfeuchtigkeit aufbringt, eine innige Mischung aus Polymerschmelze und Bronze, bevorzugt in einem Extruder, herstellt und auf herkömmliche Weise, bevorzugt als Band, extrudiert und nach der Austrittsdüse auf die gewünschte Form und Größe zerkleinert. Das so hergestellte Strahlmittel liegt in Form von kubischen Teilchen mit 0,50 bis 2,0 mm Kantenlänge vor.

Die erfindungsgemäßen Strahlmittel eignen sich für den Einsatz in allen Verfahren zum Entgraten nach dem Stand der Technik, bevorzugt solchen mit Schleuderrad-, Druckstrahl- oder Injektor-Anlagen. Von Vorteil ist dabei, daß die erfindungsgemäßen Strahlmittel gegenüber solchen nach dem Stand der Technik keine Staubentwicklung durch Bruch und/oder Trennung der Bestandteile zeigen, wodurch ein Nachreinigen der entgrateten Teile eingespart werden kann. Sie können sogar in unerwarteter Weise kostengünstig wiederverwendet werden.

Ein weiterer Vorteil ist das höhere spezifische Gewicht und die dadurch begründete höhere kinetische Energie der bronzegefüllten Strahlmittel, wodurch Schleuderräder mit geringerer Drehzahl und Druckstrahl- und Injektoranlagen mit geringerem Arbeitsdruck gefahren werden können.

Die Verwendung von mit feinverteilter Bronze gefülltem Polymer-Granulat zur Herstellung von Strahlmittel hat sich somit als besonders vorteilhaft, kostengünstig und qualitätsverbessernd erwiesen, wenn handelsübliche Thermoplaste, speziell Polyamid- oder Polycarbonat-Typen mit feinverteilter Bronze, die in sphärischer oder Pulver-Form mit Partikelgrößen von 0,01 bis 0,5 mm vorliegt, gefüllt sind und das Strahlmittel die Form von kubischen Teilchen mit Kantenlängen von 0,5 bis 2,0 mm hat. Dabei eignet sich als Polyamid ein Polyamid 11 oder Polyamid 12, das mit Bronzeteilchen von sphärischer Form mit 0,03 bis 0,1 mm Durchmesser gefüllt ist, ganz besonders gut, wobei die ganz besonders bevorzugte Kantenlänge des Strahlmittels zwischen 0,75 und 1,5 mm liegt.

## Patentansprüche

1. Wiederverwendbares Strahlmittel aus mit feinverteilten Metallpartikeln gefülltem thermoplastisch verarbeitbarem Polymer-Granulat, dadurch gekennzeichnet, daß die Metallpartikel aus Bronze bestehen und mit einem Haftvermittler beaufschlagt sind.

2. Strahlmittel nach Anspruch 1, dadurch gekennzeichnet, daß der Haftvermittler ein Amino- oder Epoxisilan ist und insbesondere in Mengen von 0,1 bis 0,4 Gew.-%, bevorzugt 0,2 bis 0,25 Gew.-% Silan auf die Bronzepartikel angebracht ist.

3. Strahlmittel gemäß Anspruch 1 und 2, dadurch gekennzeichnet, daß das Polymer-Granulat aus der Gruppe der Thermoplaste: Polyamid-Granulat, Polycarbonat-Granulat ausgewählt ist.

4. Strahlmittel gemäß einem der vorhergehenden Ansprüche, dadurch gekennzeichnet, daß das Polymer-Granulat 20 bis 90 Gew.-%, bevorzugt 60 bis 80 Gew.-% Bronze enthält.

5. Strahlmittel gemäß einem der Ansprüche 1 bis 4, dadurch gekennzeichnet, daß die feinverteilte Bronze in Partikelgrößen von 0,01 bis 0,5 mm, bevorzugt 0,05 bis 0,1 mm Durchmesser vorliegt.

6. Strahlmittel gemäß Anspruch 1, dadurch gekennzeichnet, daß das Strahlmittel eine kubische Form mit Kantenlängen zwischen 0,5 bis 2,0 mm, bevorzugt zwischen 0,75 und 1,5 mm, hat.

7. Strahlmittel gemäß einem der vorhergehenden Ansprüche 1 bis 6, dadurch gekennzeichnet, daß das Thermoplastgranulat Polyamid 11 oder Polyamid 12 ist und die Bronzepartikel sphärische Form mit Partikelgrößen von 0,05 bis 0,1 mm haben.

8. Verfahren zur Herstellung eines Strahlmittels gemäß einem der Ansprüche 1 bis 7, dadurch gekennzeichnet, daß man ein Polymer-Granulat aus handelsüblichem Thermoplast aus der Gruppe Polyamid, Polycarbonat schmilzt und mit Bronze, auf die in einem vorhergehenden Schritt 0,1 bis 0,4, bevorzugt 0,2 bis 0,25 Gew.-% eines Haftvermittlers aufgebracht worden sind, innig mischt, wobei die Bronze in fein verteilter sphärischer Form oder als Pulver mit Partikelgrößen von 0,01 bis 0,5 mm Durchmesser vorliegt und diese Mischung auf herkömmliche Weise, bevorzugt als Band, extrudiert und auf die gewünschte Form und Größe zerkleinert, so daß das Strahlmittel die Form von kubischen Teilchen mit 0,50 bis 2,0 mm, bevorzugt 0,75 bis 1,5 mm, Kantenlänge hat.

9. Verfahren gemäß Anspruch 8, dadurch gekennzeichnet, daß man als Haftvermittler Amino- oder Epoxisilan einsetzt und auf die Bronzepartikel in einer Mischeinrichtung, gegebenenfalls unter Verwendung von geeigneten organischen Lösungsmitteln, aufbringt.

10. Verfahren gemäß Anspruch 8 oder 9, dadurch gekennzeichnet, daß man als Thermoplastgranulat Polyamid 11 oder Polyamid 12, und Bronze in sphärischer Form mit Partikelgrößen von 0,05 bis 0,1 mm einsetzt.

11. Verwendung des Strahlmittels gemäß einem der Ansprüche 1 bis 7 zum Entgraten von Kanten an Metallgußteilen oder an geschliffenen Metalldruckgußteilen.

## Claims

1. Reusable shot blasting agent of thermoplastically processable polymer granules filled with finely divided bronze, characterized in that the bronze particles have a coupling agent applied to them.

2. Shot blasting agent according to Claim 1, characterized in that the coupling agent is an aminosilane or epoxysilane and is in particular applied to the bronze particles in amounts of from 0.1 to 0.4% by weight, preferably from 0.2 to 0.25% by weight, of silane.

3. Shot blasting agent according to Claim 1 or 2, characterized in that the polymer granules are selected from the group of the thermoplastics: polyamide granules, polycarbonate granules.

4. Shot blasting agent according to any of the preceding claims, characterized in that the polymer granules contain from 20 to 90% by weight, preferably from 60 to 80% by weight, of bronze.

5. Shot blasting agent according to any of Claims 1 to 4, characterized in that the finely divided bronze has particle sizes of from 0.01 to 0.5 mm, preferably from 0.05 to 0.1 mm, in diameter.

6. Shot blasting agent according to Claim 1, characterized in that the blasting agent has a cubic shape with edge lengths between 0.5 and 2.0 mm, preferably between 0.75 and 1.5 mm.

7. Shot blasting agent according to any of the preceding Claims 1 to 6, characterized in that the thermoplastic granules are polyamide 11 or polyamide 12 and the metal is bronze in spherical form having particle sizes of from 0.05 to 0.1 mm.

8. Process for producing a shot blasting agent according to any of Claims 1 to 7, characterized in that polymer granules comprising commercial thermoplastic from the group polyamide, polycarbonate are melted and are intimately mixed with bronze to which from 0.1 to 0.4% by weight, preferably from 0.2 to 0.25% by weight, of a coupling agent has been applied in a preceding step, where the bronze is present in finely divided spherical form or as powder having particle sizes of from 0.01 to 0.5 mm in diameter and this mixture is extruded in a conventional manner, preferably as tape, and is comminuted to the desired shape and size, so that the shot blasting agent has the form of cubic particles having an edge length of from 0.50 to 2.0 mm, preferably from 0.75 to 1.5 mm.

9. Process according to Claim 8, characterized in that the coupling agent used is aminosilane or epoxysilane and is applied to the bronze particles in a mixing apparatus, if desired using suitable organic solvents.

10. Process according to Claim 8 or 9, characterized in that the thermoplastic granules used are polyamide 11 or polyamide 12, and bronze is used in spherical form having particle sizes of from 0.05 to 0.1 mm.

11. Use of the shot blasting agent according to any of Claims 1 to 7 for deburring edges on metal castings or on ground metal pressure castings.

## Revendications

1. Moyen de grenaillage réutilisable constitué de granules de polymères remplis de bronze à l'état finement divisé et susceptibles d'opérer à l'état thermoplastique, caractérisé en ce que les particules de bronze sont solidarisées à l'aide d'un agent adhésif.

2. Moyen de grenaillage selon la revendication 1, caractérisé en ce que l'agent adhésif est un aminosilane ou époxysilane et, en particulier, est employé à raison de 0,1 à 0,4% en poids de préférence de 0,2 à 0,25% en poids de silane aux particules de bronze.

3. Moyen de grenaillage selon la revendication 1 et 2, caractérisé en ce que les granules de polymères sont choisis dans le groupe des thermoplastiques consistant en granules de polyamide ou granules de polycarbonate.

4. Moyen de grenaillage selon l'une des revendications précédentes, caractérisé en ce que les granules de polymères contiennent de 20 à 90% en poids, de préférence de 60 à 80% en poids de bronze.

5. Moyen de grenaillage selon l'une des revendications 1 à 4, caractérisé en ce que le bronze finement divisé présente une granulométrie de 0,01 à 0,5 mm, de préférence de 0,05 à 0,1 mm de diamètre.

6. Moyen de grenaillage selon la revendication 1, caractérisé en ce que le moyen de grenaillage présente une forme cubique dont des longueurs d'arêtes sont comprises entre 0,5 et 2,0 mm, de préférence entre 0,75 et 1,5 mm.

7. Moyen de grenaillage selon l'une des revendications précédentes 1 à 6, caractérisé en ce que les granules thermoplastiques sont formés de polyamide 11 ou de polyamide 12 et en ce que le métal est du bronze sous forme sphérique présentant une grunulométrie comprise entre 0,5 et 0,1 mm.

8. Procédé de fabrication d'un moyen de grenaillage selon l'une des revendications 1 à 7, caractérisé en ce que l'on fait fondre des granules de polymères en matière thermoplastique du commerce, choisi dans le groupe comprenant les polyamides et les carbonates et on mélange intimement avec du bronze auquel on a ajouté dans une étape antérieure de 0,1 à 0,4, de préférence de 0,2 à 0,25% en poids, d'un agent adhésif, le bronze étant présent sous forme sphérique finement divisée ou sous forme de poudre ayant une granulométrie de 0,01 à 0,5 mm de diamètre et en ce qu'on extrude le de se mélange de la façon habituelle, de préférence sous forme de bande ou ruban, et on le fragmente à la forme et à la taille souhaitées, de telle façon que le moyen de grenaillage se présente sous la forme de particules cubiques de 0,50 à 2,0 mm, de préférence de 0,75 à 1,5 mm de longueur d'arête.

9. Procédé selon la revendication 8, caractérisé en ce que l'agent adhésif utilisé consiste en aminosilane ou époxysilane et on l'applique sur les particules de bronze dans un dispositif de mélange, le cas échéant en présence de solvants organiques appropriés.

10. Procédé selon la revendication 8 ou 9, caractérisé en ce que l'on utilise comme granules de matière thermoplastique du polyamide 11 ou du polyamide 12, et le bronze étant sous forme de sphère de 0,05 à 0,1 mm.

11. Application du moyen de grenaillage selon l'une des revendications 1 à 7, pour l'ébavurage des arêtes des pièces de fonderie en métal ou des pièces métalliques ou poncées obtenues en fonderie sous pression.
